# EUROPÄISCHE PATENTANMELDUNG

(11) **EP 1 273 331 A2**
(43) Veröffentlichungstag der Anmeldung: **08.01.2003**
(21) Anmeldenummer: 02014493.7
(22) Anmeldetag: 29.06.2002
(51) Int. Cl.: B01D 15/00, B41F 35/00

(54) **Aufbereitung von gebrauchten Waschmitteln**

(30) Priorität: 05.07.2001 DE 10132600
(71) Anmelder: MAN Roland Druckmaschinen AG, 63012 Offenbach (DE)
(72) Erfinder: Böck, Thomas, 86356 Neusäss (DE); Zepf, Manfred, 86399 Bobingen (DE)
(74) Vertreter: Schober, Stefan, Dipl.-Ing.

(57) **Zusammenfassung**

Die Erfindung betrifft ein Verfahren zur Waschmittelaufbereitung, wobei aus dem Waschmittelrücklauf störende Mengen an Inhaltsstoffen herausgezogen werden und entsprechend ihrer Entnahme entzogene erforderliche Additive als aufbereitete Mittel oder Frischadditive in den Waschmittelzulauf zudosiert werden. Des weiteren betrifft die Erfindung ein Verfahren zur Überwachung eines Waschmittelkreislaufs.

## Beschreibung

Die vorliegende Erfindung betrifft ein Verfahren zur Verbesserung der Aufbereitung von gebrauchten, sich im Kreislauf befindlichen Waschmitteln in Waschsystemen von Druckmaschinen. Die vorliegende Erfindung betrifft außerdem Verfahren und Mittel zur Regelung der inhaltsstofflichen Zusammensetzung des Waschmittelrücklaufs.

Verschiedene Teile und Bereiche einer Druckmaschine unterliegen ständiger sowohl automatischer als auch manueller Reinigung mit verschiedenen Waschmitteln. Waschmittel enthalten organische Lösungsmittel mit bestimmten Additiven. Als Additive werden im Wesentlichen zum einen Korrosionsinhibitoren eingesetzt, um an den Metallteilen Korrosion zu unterbinden, und zum anderen Emulgatoren, um das Waschmittel in einem arbeitsfähigen Zustand zu halten. Die Menge des Emulgators wird durch zwei Kriterien bestimmt. Liegt zu wenig Emulgator vor, wird die Wasch- bzw. Fließfähigkeit des Waschmittels negativ beeinflusst. Liegt eine zu hohe Menge an Emulgator vor, ändert sich die Viskosität und das nach dem Reinigungsvorgang in der Regel als Zwei-Phasen-Gemisch - nämlich eine organische Phase und eine Wasserphase - vorliegende Waschmittel unterliegt im Absetztank keiner Trennung der Medien und wird dadurch z.B. mit einem Papierfilter nicht mehr filtrierbar.

Die Erfindung befasst sich mit den Problemen, die bei der Verarmung von Additiven im Waschmittel sowie der Anreicherung von organischen Stoffen im Waschmittel verbunden sind. Diese Phänomene können auf folgende Situationen zurückgeführt werden.

Zum einen besteht eine kontinuierliche Verflüchtigung von Additiven (z.B. Emulgatoren und Korrosionsinhibitoren) bei mehreren Filtrationsdurchläufen. Unter Verflüchtigung wird in diesem Zusammenhang der Verlust an Additiv durch Verdunstung einerseits aber auch durch die zusätzlich Wirkung von Absorption in Feststoffen, Adsorption an Anlagenteilen oder Lösung bzw. Suspension in Fluiden, die dem Waschmittelkreislauf entzogen werden, andererseits verstanden. Der Verlust an diesen Additiven (z.B. durch Verdunsten auf dem Gummituch, Eintrag in die Papierbahn und Verbleib im Restsumpf der Filtration) kann beim Waschvorgang in der Druckmaschine durch den Zusatz von Frischadditiven (aromatenarmer Kohlenwasserstoff mit Korrosionsinhibitor und Emulgator etc.) nicht einfach ausgeglichen werden. Ein geringer Prozentsatz an Additiven (z.B. Emulgatoren und Korrosionsinhibitoren etc.) bleibt auch im Wasser gebunden, welches durch Schwerkraft vom Schmutzwaschmittel getrennt und gesondert kanalkonform aufbereitet wird. Außerdem verbleibt durch den Waschvorgang und das dabei stattfindende Emulgieren von Wasser und Waschmittel durch die anschließende Filtration und Wasseraufbereitung ein geringer Anteil an Emulgator im Wasser. Dadurch und durch Verdunstung im Waschvorgang wird der Emulgatoranteil vermindert. Diese Situation charakterisiert den Zustand einer Additivverarmung im Waschmittel.

Andererseits kann eine Akkumulation von Inhaltsstoffen (Additive zuzüglich anderer organischer Stoffe) im Filtrat auftreten, die vor allem dann in Erscheinung tritt, wenn durch den Einsatz von Waschsystemen in der Druckmaschine der Rücklauf davon mit einem sehr hohen Anteil von Schlämmen befrachtet ist. Insbesondere findet man im Filtrat und verstärkt in Waschwalzenbezug - Fremdstoffe, z.B. Leinölfirnis oder Kokosfettester, die vorzugsweise in Druckfarben zur Anwendung kommen. Kokosfettester wirken in Waschmitteln allerdings auch als Emulgator. Beide Stoffe können bei höherer Anreicherung im Filtrat am Walzenbezug zu Quellungen und im schlimmsten Fall zu einer Zerstörung der Walzen führen. Die Anreicherung des Wasser/Waschmittel-Gemisches mit Inhaltsstoffen (z.B. u.a. Emulgatoren und Fremdstoffe aus der Druckfarbe) führt dazu, dass das ursprünglich auf schnelle Trennung von Wasser und Waschmittel ausgelegte Emulgierverhalten des Waschmittels verändert wird. Dadurch kann im äußersten Fall keine Trennung zwischen Wasser und Waschmittel im Trenntank mehr stattfinden, weil die Emulsion auch im Ruhezustand über längere Zeit stabil bleibt. Außerdem wird die Viskosität des Waschmittels stark verändert. Dies führt zu einem schnellen Verblocken des Papierfilters, der solche Emulsionen und Fluide nicht verarbeiten kann. Um eine ungewollte Anreicherung von Fremdstoffen aus Druckfarbe, Papierstaub und Feuchtmittelzusätzen im sich im Kreislauf befindlichen Waschmittel zu verhindern, ist es nämlich notwendig, grobe Verunreinigungen, z.B. Farbschlämme und Papierstaub, vor dem Zwischenbunkern in einem Sammeltank zu extrahieren. Dies kann zweckmäßigerweise durch Vorschalten eines geeigneten Filters oder einer ähnlichen Vorrichtung, die vorwiegend über eine Siebwirkung arbeitet, z.B. ein Papierfilter, geschehen. Dadurch wird vermieden, dass sich aus dem Bodensumpf eines Sammeltanks Fremdstoffe über den Zeitraum bis zur nächsten Filtration in die gebrauchte Waschflüssigkeit übertragen. Die Reinigungszyklen des Absetztanks werden in der Regel den Wechselintervallen der Filter angepasst. Dies kann bei ca. halbjährlichem Filterwechsel zu einer sehr hohen Schlammbefrachtung der Tanks führen. Bisweilen kann daher eine so starke Akkumulierung an Emulgator stattfinden, dass eine Trennung der Waschflüssigkeit in Wasser und Waschmittel nicht mehr erfolgt. Daraus wiederum resultiert ebenfalls ein Verblocken des Filters, der Emulsionen nicht verarbeiten kann. Außerdem ist durch den Einlass von Schlamm in den Wassertank eine Aufbereitung des Wassers durch Beimischung eines Flockungsmittels ebenfalls nicht mehr möglich. Diese Situation charakterisiert den Zustand einer Anreicherung an Emulgator bzw. Inhaltsstoffen.

Bislang geht man so vor, dass man vor der Filtration nach dem letzten Schmutzmitteleintrag noch eine sogenannte Absetzzeit gewähren lässt, um sicherzustellen, dass sich ein Großteil der Feststoffe am Boden des Behälters absetzt. Bei einer zu erwarteten sehr hohen Schmutzbefrachtung des Waschmediums plant man in der Regel zudem einen zweiten Absetztank ein, um die vorstehend genannte Absetzzeit zu erhöhen und um den Eintrag von festen Teilchen in den Filter zu vermindern und damit die Filterstandzeit zu erhöhen. Dadurch wird allerdings die Aufnahme von Fremdstoffen aus dem Bodensumpf durch lange Verweilzeiten in dem Sammel- und Absetztank im ungefilterten Zustand wiederum begünstigt.

Die vorstehend genannten Probleme werden erfindungsgemäß dadurch gelöst, indem man dem Filtrat nach dem eigentlichen Filtervorgang durch ein geeignetes Verfahren die Inhaltsstoffe (Additive, d.h. Emulgator, Korrosionsinhibitoren zuzüglich aus der Anlage gelöster oder emulgierter organischer Stoffe) entzieht und die Additive anschließend als Konzentrat in ausreichender Menge wieder am geeigneten Ort zudosiert. Dadurch kann eine Aufkonzentrierung von schädlichen Inhaltsstoffen, wie beispielsweise Leinöle, Fettsäureester usw., vermieden werden. Die Wartungsintervalle einer Recyclinganlage verlängern sich dadurch.

Die vorliegende Erfindung betrifft somit ein Verfahren zur Entfernung von vorwiegend organischen Schlämmen aus dem Waschmittelrücklauf, um zu verhindern, dass Schlämme in zu großer Menge in die Aufbereitungsanlagen gelangen. Die Entfernung erfolgt durch Filterung des Waschmittelrücklaufs mit speziellen Filtern, die schädliche Inhaltsstoffe beseitigen. Die Filter arbeiten im Wesentlichen nach dem Absorptionsprinzip. Daher sind für Additive, wie Korrosionsinhibitoren und Emulgatoren, und für aus der Anlage stammende organische Stoffe affine Absorbentien als Füllstoffe für geeignet ausgelegte Filterkörper, vorzugsweise Durchströmfilter, als die speziellen Filter geeignet. Die Filter können in Kartuschenform für den kontinuierlichen Betrieb ausgelegt sein. Als Absorbentien eignen sich für die vorstehend angegebenen Stoffe affine Aktivkohle, affines Kieselgel, Molsiebe und affine organische Stoffe, wie poröse Kunststoffe. Die Absorptionskapazität wird so eingestellt, dass der Anteil der vorstehend angegebenen Stoffe möglichst vollständig dem Waschmittelkreislauf nach dem Einsatz entzogen wird. Sofern das Absorptionsmittel es zulässt, können die absorbierten Stoffe wieder herausgelöst und aufbereitet werden und das Absorptionsmittel und/oder die absorbierten Stoffe wieder verwendet werden. Vorzugsweise sind die Filter so aufgebaut, dass ein angemessener Durchsatz möglich ist.

Die den organischen Schlamm ausmachenden Stoffe sind Korrosionsinhibitoren und Emulgatoren, wie sie z.B. in den auf dem Gebiet der Waschmittel für Druckmaschinen üblich sind. Diese Stoffe werden z.B. in den Produkten Eurostar 75 W (Druck-Chemie, Ammerbuch DE), Böttcherin 100-ASV (Felix Böttcher GmbH & Co., Köln DE) sowie Rotowash 60-1132 (DS DruckereiService GmbH, Reutlingen DE) eingesetzt.

Korrosionsinhibitoren für den vorliegenden Zweck sind in der Regel aromatischer Natur. Diese umfassen daher Aromaten und/oder Heteroaromaten. Mögliche weitere Inhibitoren sind Stickstoff-, Schwefel, Phosphor und/oder Übergangsmetall enthaltende Stoffe, die auch auf anderen Fachgebieten üblich sind. Heteroaromaten für diesen Zweck sind fünf oder sechsgliedrig oder benzokondensiert und enthalten Sauerstoff, Stickstoff- und/oder Schwefelatome. Amine weisen in der Regel eine längere Alkylkette auf. Phosphate, Phosphonate und Sulfonate liegen im Allgemeinen in neutralisierter Form, d.h. in Salzform (Na, K, NH₄ oder NR₄) vor.

Emulgatoren für den vorliegenden Zweck enthalten in der Regel aromatische Gruppen aufweisende Stoffe. Diese können Heteroatome tragen. In der Regel sind die Emulgatoren mit wenigstens zwei unterschiedlichen chemischen Gruppen versehen, um das Emulgatormolekül amphiphil zu machen. Das heißt, dass das Emulgatormolekül für den zu lösenden Stoff einerseits und für das Waschmittel andererseits eine gewisse Affinität aufweist. Emulgatoren für den vorliegenden Zweck können Tenside sein, die eine im gewünschten Ausmaß stattfindende emulgierende Wirkung im Kohlenwasserstoff/Wasser-Gemisch hervorrufen. Diese Tenside können als funktionelle Gruppen Sulfonsäuregruppen, Phosphorsäuregruppe, Aminogruppen, Phosphinogruppen, Carboxylgruppen, Thiogruppen einzeln, z.B. als kationisches bzw. anionogenes oder kombiniert z.B. als amphoteres Tensid, aufweisen. Neutrale Tenside sind in der Regel nicht-ionische Tenside vom Sorbitantyp oder Kohlenhydrattyp, die eine stark hydrophile und eine stark lipophile Gruppe tragen. Alle diese Stoffe können auch fluoriert sein, wodurch die Tensidkraft und damit die Emulgatorkraft, insbesondere in einem vorwiegend organischen Milieu stark erhöht werden kann.

Der Vorgang der Entfernung der störenden Bestandteile aus dem Waschmittelrücklauf wird durch Messfühler verfolgt. Hierbei werden spezifische oder semispezifische Sensoren eingesetzt, die die Konzentration an schädlichen Inhaltsstoffen erkennen und eine mögliche Aufkonzentrierung oder Unterdosierung anzeigen. An einer technisch geeigneten Stelle erfolgt dann eine Zudosierung der für den Waschvorgang notwendigen Additive in der gewünschten Menge entsprechend der beispielsweise durch Filterung mit Aktivkohle entfernten Menge. Die zugesetzten Additive können entweder aufbereitete Additive aus der Extraktion des Filtrats oder Frischadditive sein. Durch das erfindungsgemäße Verfahren im Zusammenhang mit der Methode der Filtratanalyse zur Feststellung chemischer Veränderungen kann man durch Tausch des Waschmittels und durch Ergänzung und/oder Entfernung von Stoffen den gewünschten Zustand des Waschmittels wiederherstellen.

Die vorliegende Erfindung führt somit zu einer längeren Standzeit der im Kreislauf geführten Waschflüssigkeit. Insgesamt, insbesondere im Fall der Wiederaufbereitung der aus dem Kreislauf herausgezogenen Additive, wird eine deutliche Senkung der Verwendung von VOC (volatile organic compounds) erzielt.

## Patentansprüche

1. Verfahren zur Entfernung von vorwiegend organischen Inhaltsstoffen aus dem Waschmittelrücklauf von Druckmaschinen, **dadurch gekennzeichnet, dass** eine Behandlung des Waschmittelrücklaufs vor dem erneuten Einsatz mit einem für Inhaltsstoffe affinen Absorptionsmittel erfolgt.

2. Verfahren nach Anspruch 1, **dadurch gekennzeichnet, dass** das affine Absorptionsmittel Aktivkohle, Kieselgel, Kieselgur, Molsiebe und/oder organische Stoffe, wie poröse Kunststoffe, umfasst.

3. Verfahren nach Anspruch 2, **dadurch gekennzeichnet, dass** das affine Absorptionsmittel Aktivkohle umfasst.

4. Verfahren nach einem der vorangehenden Ansprüche, **dadurch gekennzeichnet, dass** die absorbierten Additive wiederaufbereitet werden.

5. Verfahren nach Anspruch 4, wobei die Additive Korrosionsinhibitor(en) und/oder Emulgator(en) sind.

6. Verfahren nach einem der vorangehenden Ansprüche, **dadurch gekennzeichnet, dass** gemäß einem Ist-Wert eines in der Waschflüssigkeit enthaltenen Additivs aus dem Filtrat eines im Wesentlichen durch Siebwirkung arbeitenden Filters einer Aufbereitungsanlage für Waschmittel verbrauchte und zu stark angereicherte Inhaltsstoffe mit Hilfe eines im Wesentlichen durch Absorptionswirkung arbeitenden Filter herausgezogen werden und entsprechend der vorgeschriebenen Menge fehlendes Additiv in frischer Form wieder in den Waschmittelzulauf dosiert wird.

7. Verfahren nach Anspruch 6, **dadurch gekennzeichnet, dass** außerdem chemische Veränderungen während der Messwertaufnahme festgestellt werden, wodurch a) der Tausch des Waschmittels veranlasst wird, oder b) die Ergänzung bzw. Entfernung von Stoffen, insbesondere Additiven veranlasst wird.
